# EUROPEAN PATENT SPECIFICATION

(11) **EP 3 325 289 B1**
(45) Date of publication and mention of the grant of the patent: **26.06.2019**
(21) Application number: 16738462.7
(22) Date of filing: 14.07.2016
(51) Int. Cl.: B60C 23/00

(54) **CENTRAL TYRE INFLATION SYSTEM**
ZENTRALES REIFENAUFPUMPSYSTEM
SYSTÈME CENTRALISÉ DE GONFLAGE DE PNEU

(30) Priority: 17.07.2015 GB 201512498
(43) Date of publication of application: 30.05.2018
(73) Proprietor: Jaguar Land Rover Limited, Coventry, Warwickshire CV3 4LF (GB)
(72) Inventor: DUNNING, Emma-Claire, Coventry Warwickshire CV3 4LF (GB); KING, Paul, Coventry Warwickshire CV3 4LF (GB); LESBIREL, Robbie, Coventry Warwickshire CV3 4LF (GB); DODU, Maelle, Coventry Warwickshire CV3 4LF (GB); TRAN, Thuy-Yung, Coventry Warwickshire CV3 4LF (GB)
(74) Representative: Lockey, Robert Alexander
(86) International application number: PCT/EP2016/066762
(87) International publication number: WO 2017/012977

(56) References cited:
- EP-A2- 0 344 004
- DE-C1- 10 016 970

## Description

### TECHNICAL FIELD

The present invention relates to a central tyre inflation system (CTIS) for inflating a tyre of a vehicle to compensate for a puncture or similar air loss; to an engine control unit (ECU); to a method; to a vehicle; and to a computer program product.

### BACKGROUND

Heavy goods, military and off-road vehicles are sometimes equipped with a central tyre inflation system (CTIS) which can inflate or deflate each tyre of the vehicle to a desired pressure. Such systems, as disclosed by EP0344004 A2, are also used to detect air leakages from tyres, and to compensate for any air loss. This can maintain the integrity of a tyre over long periods in the event of a minor puncture, and can provide additional time for the driver to react appropriately if the puncture is more severe. A CTIS often operates in combination with a tyre pressure monitoring system (TPMS) which provides measurements of air pressure in each of the tyres of a vehicle.

Central tyre inflation systems have thus far been installed mainly in large non-consumer vehicles that can easily accommodate the CTIS components. Noise such as may be generated, for example, by a compressor of the system during tyre inflation, is typically of little concern in such vehicles, which often have many sources of noise including a relatively large engine.

However, to implement a CTIS in a consumer vehicle is more challenging as space is much more limited and a higher level of refinement is required. In particular, the noise generated by the CTIS compressor during tyre inflation is much more noticeable in a consumer vehicle and may be considered unacceptable. While it is possible to enclose the compressor in a noise-reducing housing, this may create other problems such as overheating of the compressor due to the restrictive effect that such a housing has on heat dissipation.

It is against this background that the present invention has been devised.

### SUMMARY OF THE INVENTION

Aspects and embodiments of the invention provide a CTIS for inflating a tyre of a vehicle to compensate for a puncture or similar air loss; a method and a vehicle as claimed in the appended claims.

For the avoidance of doubt, references herein to a central tyre inflation system (CTIS) are to an apparatus for controlling the pressure of one or more tyres.

For the purposes of this disclosure, it is to be understood that the control system described herein can comprise a control unit or computational device having one or more electronic processors. A vehicle and/or a system thereof may comprise a single control unit or electronic controller or alternatively different functions of the controller(s) may be embodied in, or hosted in, different control units or controllers. As used herein, the term "control unit" will be understood to include both a single control unit or controller and a plurality of control units or controllers collectively operating to provide the required control functionality. The term "module" is likewise intended to include either a single computational module performing a single or multiple functions or a plurality of computational modules performing separable functions. A set of instructions could be provided which, when executed, cause said controller(s) or control unit(s) or module(s) to implement the control techniques described herein (including the method(s) described below). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on or more electronic processors, optionally the same one or more processors as the first controller. In any event, the set of instructions described above may be embedded in a computer-readable storage medium (e.g., a non-transitory storage medium) that may comprise any mechanism for storing information in a form readable by a machine or electronic processors/computational device, including: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

### BRIEF DESCRIPTION OF DRAWINGS

One or more embodiments of the present invention will now be described, by way of example only, with reference to the accompanying drawings, in which like components are assigned like numerals, and in which:-
Figure 1 is a schematic representation of a central tyre inflation system (CTIS) according to an embodiment of the invention;
Figure 2 is a schematic representation of a valve arrangement of the CTIS shown in Figure 1;
Figure 3 is a vehicle system boundary diagram representing the CTIS shown in Figures 1 and 2;
Figure 4 is a flow diagram showing a process according to an embodiment of the invention for controlling the CTIS of Figures 1 to 3; and
Figure 5 is a flow diagram showing a process according to another embodiment of the invention for controlling the CTIS of Figures 1 to 3.

### DETAILED DESCRIPTION

In the following description and in the drawings, reference letters are used to collectively or un-specifically identify equivalent or essentially equivalent components. Where necessary, a specific component in a collection of equivalent or essentially equivalent components is identified by suffixing a reference letters in subscript format.

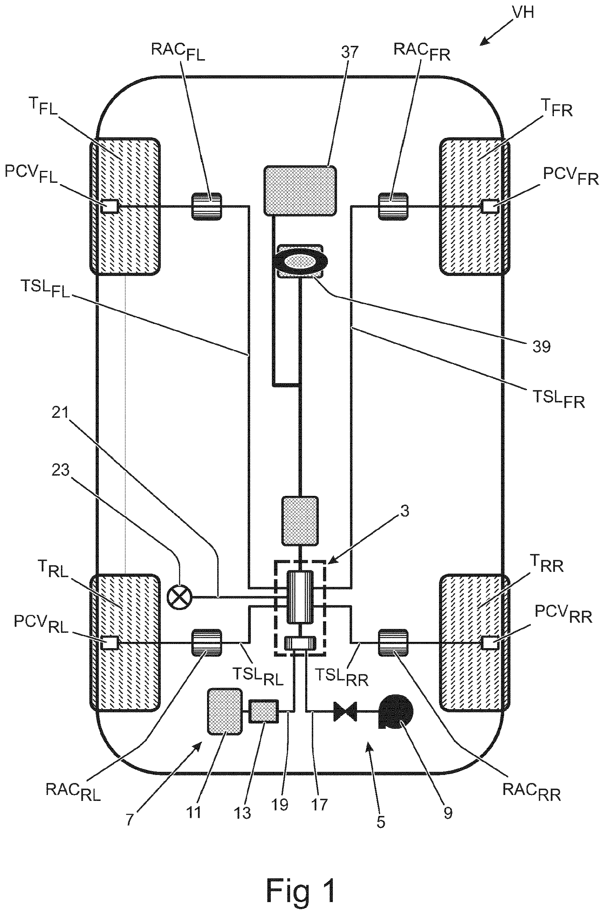

To provide context for the invention, Figure 1 shows schematically a CTIS 1 that is suitable for use in embodiments of the invention, although it should be appreciated that the CTIS 1 described here is merely representative of the type of system that may be used, and many other variations are possible.

The CTIS 1 is installed in a vehicle VH that has four wheels W each having a tyre T mounted on a wheel hub (not shown). The wheels W (and the tyres T) are identified herein based on their relative position on the vehicle VH, namely: front left (FL), front right (FR), rear left (RL) and rear right (RR). This nomenclature is employed to identify the components of the CTIS 1 associated with the respective tyres T. The front tyres T_{FR}, T_{FL} are mounted on a front axle and the rear wheels T_{RR}, T_{RL} are mounted on a rear axle of the vehicle.

The CTIS 1 comprises four pneumatic control valves PCV fixedly mounted to the wheel hubs and arranged to control the supply of compressed air to and from a respective tyre cavity. The pneumatic control valves PCV are pneumatically operated in response to changes in the pressure in the associated tyre supply line TSL. Specifically, the pneumatic control valves PCV are operable to cycle sequentially (i.e. to toggle) between an open state and a closed state in response to the application of a pressure exceeding a valve activation pressure. The pneumatic control valves PCV are stable in both the open and closed state via a latching mechanism, i.e. they can each be considered as a pressure actuated bi-stable valve. Herein the application of air at a pressure and time sufficient to switch the valve from one state to its other state, i.e. from open to closed or from closed to open, is referred to as "toggling" the valve, and the application of said air in this manner is referred to as a high pressure (pneumatic) control signal.

UK Patent application GB2516704 describes such a pneumatic latching valve suitable for a CTIS system. It will be appreciated that each pneumatic control valve could have additional operating states which are cycled through sequentially in dependence on said pneumatic control signal.

The CTIS 1 further comprises a valve block 3 for controlling the supply of compressed air to each of the pneumatic control valves PCV. The valve block 3 is fluidly coupled to a first compressed air source 5 and a second compressed air source 7. The first compressed air source 5 provides air at a high flow rate and low pressure (HF/LP); and the second compressed air source 7 is operable to provide air at a higher pressure. In the present arrangement, the first compressed air source 5 comprises a compressor 9; and the second compressed air source 7 comprises a reservoir 11 having an associated reservoir pressure sensor 13. The compressor 9 can be used to supply the reservoir 11 with compressed air to increase the pressure therein.

The activation pressure of each said pneumatic control valve PCV is below the pressure of the second compressed air source 7. In this manner the second compressed air source 7 can be applied for a short duration to switch one or more selected pneumatic control valves PCV from a closed state to an open state, and vice versa.

An electronic control unit (ECU) 15 is provided to control operation of the CTIS 1. Specifically, the ECU 15 is configured to control operation of the valve block 3 and the compressor 9.

A tyre supply line TSL supplies compressed air from the valve block 3 to each tyre T. Specifically, the CTIS 1 comprises a front left tyre supply line TSL_{FL}, a front right tyre supply line TSL_{FR}, a rear left tyre supply line TSL_{RL} and a rear right tyre supply line TSL_{RR}. The pneumatic control valves PCV are provided at the ends of the tyre supply lines TSL to control the supply of compressed air to the respective tyres T. A section of each tyre supply line TSL extends along the respective vehicle axles to supply compressed air to the pneumatic control valves PCV mounted in each wheel hub. A rotary air coupling (RAC) is provided in each tyre supply line TSL to provide a fluid coupling to supply compressed air from the valve block 3 to the section of each tyre supply line TSL disposed in the vehicle axle.

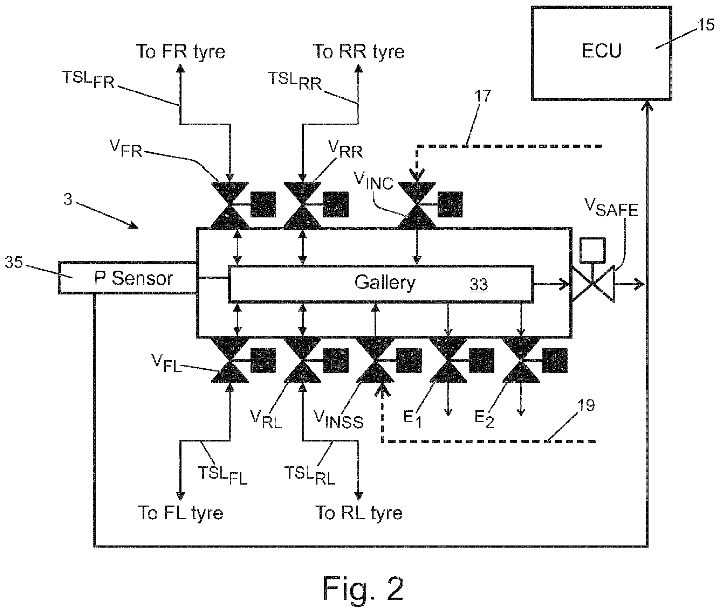

The valve block 3 will now be described in more detail with reference to Figure 2. The valve block 3 comprises first and second inlet valves V_{INC}, V_{INSS}. The first inlet valve V_{INC} operatively controls the supply of compressed air from the first compressed air source 5 which is connected to the valve block 3 by a first supply line 17. The second inlet valve V_{INSS} operatively controls the supply of compressed air from the second compressed air source 7 which is connected to the valve block 3 by a second supply line 19.

The valve block 3 comprises four outlet valves (collectively referenced as V_{O}) for controlling the supply of compressed air to the respective tyre supply lines TSL. In particular, the valve block 3 comprises: a front left outlet valve V_{FLO} for controlling the supply of compressed air to the front left tyre supply line TSL_{FL}; a rear left outlet valve V_{RLO} for controlling the supply of compressed air to the rear left tyre supply line TSL_{RL}; a front right outlet valve V_{FRO} for controlling the supply of compressed air to the front right tyre supply line TSL_{FR}; and a rear right outlet valve V_{RRO} for controlling the supply of compressed air to the rear right air supply line TSL_{RR}. The outlet valves V_{O} are operable independently of each other to enable the selective supply of compressed air to one or more of the tyre supply lines TSL.

The valve block 3 also comprises first and second exhaust valves E₁, E₂ coupled to an exhaust line 21. The exhaust line 21 terminates with an exhaust outlet 23 which is open to atmosphere to vent exhaust air from the CTIS 1. The first and second exhaust valves E₁, E₂ are operable to control the flow of exhaust air to the exhaust line 21, for example during tyre deflation. A safety valve V_{SAFE} is also provided in the valve block 3. The safety valve V_{SAFE} is operable to vent to atmosphere any excess air which might accumulate in the valve block 3 due, for example, to malfunction of any of the components of the CTIS 1.

The inlet valves V_{INC}, V_{INSS}, the outlet valves V_{O} and the exhaust valves E₁, E₂ are solenoid valves having a normally-closed configuration (illustrated by a filled symbol in Figure 2). The inlet valves V_{INC}, V_{INSS}, the outlet valves V_{O} and the exhaust valves E₁, E₂ are operable independently of each other and are actuated by control signals received from the ECU 15. The safety valve V_{SAFE} is also a solenoid valve but has a normally-open configuration (illustrated by an open symbol in Figure 2). The safety valve V_{SAFE} is closed by receiving a control signal from the ECU 15.

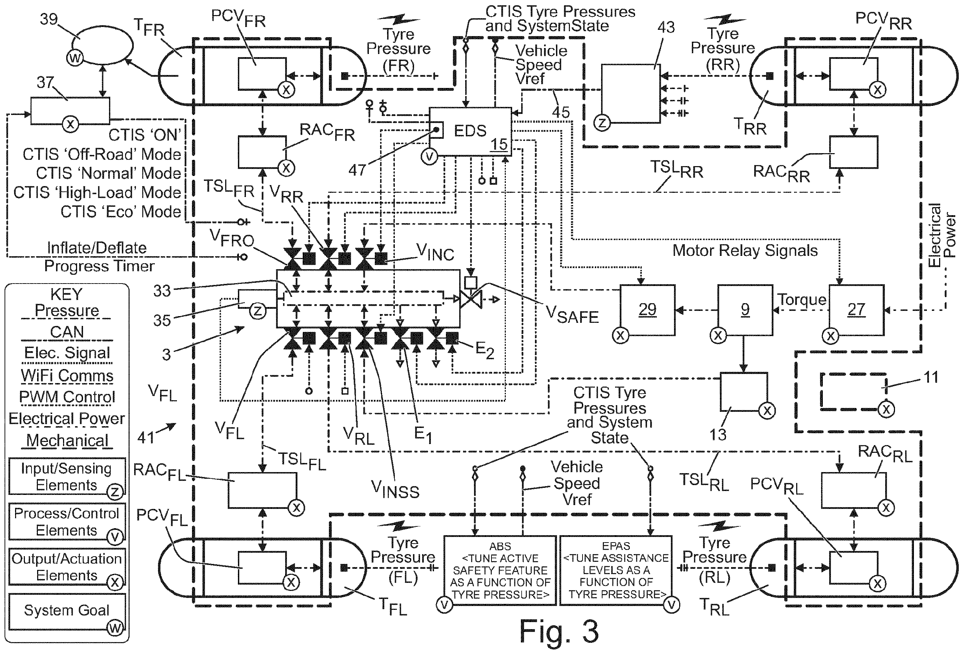

The compressor 9 is a dedicated compressor for the CTIS 1. The compressor 9, and air outlet from the reservoir 11 are controlled, directly or indirectly, by the ECU 15. The compressor 9 comprises an electric motor 27 (shown in Figure 3) and has an operating pressure of up to approximately 9 bar. A dryer unit 29 (shown in Figure 3) is coupled to the compressor 9 partway through a first compressed air supply line 31 (shown in Figure 3) connecting the compressor 9 to the valve block 3. Compressed air at a pressure of up to 9 bar is stored in the reservoir 11.

A fluid gallery 33 is provided in the valve block 3. The gallery 33 is open to each of: the outlet valves V_{O}, the inlet valves V_{INC}, V_{INSS}, the exhaust valves E₁, E₂, and the safety valve V_{SAFE}. The valve block 3 houses a pressure sensor 35 arranged to measure the pressure in a gallery 33. The gallery 33 can be selectively placed in fluid communication with one or more of the tyre supply lines TSL by opening one or more of the outlet valves VO. In the present arrangement, the pressure sensor 35 measures the pressure in the individual tyre supply lines TSL by placing the tyre supply line TSL in fluid communication with the gallery 33. By opening the pneumatic control valve PCV associated with that tyre supply line TSL, the pressure sensor 35 can measure the air pressure in the tyre cavity (hereinafter referred to, for simplicity, as the tyre pressure).

The gallery 33 receives compressed air from each of said first and second compressed air sources 5, 7 via the respective first and second inlet valves V_{INC}, V_{INSS}. The first inlet valve V_{INC} is operable to control the supply of compressed air from the first compressed air source 5 to the gallery 33. The second inlet valve V_{INSS} is operable to control the supply of compressed air from the second compressed air source 7 to the gallery 33. In use, the first compressed air source 5 is the primary source of compressed air for inflating the tyres T. One or more of the tyre supply lines TSL can be placed in communication with the first compressed air source 5 by opening the first inlet valve V_{INC} and the appropriate outlet valves V_{O}. The second compressed air source 7 provides a higher pressure supply which is controlled by the second inlet valve V_{INSS} to generate a pneumatic control signal as described above for controlling operation of one or more of said pneumatic control valves PCV to tyres for which the respective outlet valves V_{O} are open, i.e. to toggle the valves from one stable state to the other stable state. Specifically, the second inlet valve V_{INSS} is operated to generate the pneumatic control signal to cycle the pneumatic control valve(s) PCV in communication with the gallery 33. The pneumatic control valve(s) PCV cycle through their respective operating states in response to the pneumatic control signal and, therefore, can be operated to control the supply of compressed air to and from the respective tyres T. By opening the pneumatic control valve(s) PCV, one or more of the tyres T can be placed in communication with the respective tyre supply lines TSL. The valve block 3 can be operated to place the tyre supply lines TSL in communication with the first compressed air source 5 to inflate one or more of said tyres T; or in communication with the exhaust line 21 to deflate one or more of said tyres T. Furthermore, the valve block 3 can be operated to measure the pressure of the air in the tyres T.

To measure an individual tyre pressure of a wheel having a closed PCV, the valve block 3 is operated to close the first and second inlet valves V_{INC}, V_{INSS}, and the exhaust valves E₁, E₂. The outlet valve V_{O} corresponding to the tyre supply line TSL for the particular tyre is opened to place the tyre supply line TSL in fluid communication with the gallery 33. A pneumatic control signal is then generated by operating the second inlet valve V_{INSS} to open the pneumatic control valve PCV for that tyre T. The tyre T is thereby placed in communication with the gallery 33 via the corresponding tyre supply line TSL. The pressure sensor 35 then measures the air pressure in the gallery 33 to determine the tyre pressure for that particular tyre T. Once the pressure has been measured, if no further action is required in relation to that tyre a pneumatic control signal may be generated by operating the second inlet valve V_{INSS} to close the pneumatic control valve PCV.

The CTIS 1 according to the present arrangement uses a single pressure sensor 35 for measuring the pressure in the gallery 33. It will be appreciated that more than one pressure sensor 35 could be provided. For example, a pressure sensor 35 could be provided in communication with each tyre supply line TSL. Equally, a separate valve block 3 could be provided for each tyre T or for each axle.

The ECU 15 is programmed to control the overall operation of the CTIS 1. The ECU 15 is configured to determine an inflation time or a deflation time. The inflation time is the period of time over which compressed air must be supplied from the first compressed air source 5 to the one or more tyre(s) T to reach the target tyre pressure. The inflation time is a function of one or more of the following: the pressure differential between the target tyre pressure and the current tyre pressure (the current tyre pressure being the tyre pressure prior to inflation); the operating characteristics of the first compressed air source (e.g. nominal pressure and flow rate); the number of tyres T which are being inflated at any given time (if more than one tyre T can be inflated simultaneously); and the volume and/or temperature of the tyre cavities.

The deflation time is the period of time over which compressed air must be vented from the one or more tyre(s) T through the first and second exhaust valves E₁, E₂ to reach the target tyre pressure. The deflation time is also a function of the number of tyres T being simultaneously deflated, of the current tyre pressure (i.e. the tyre pressure before deflation), of the target tyre pressure and/or the pressure differential to be achieved by tyre deflation and/or of the volume and/or temperature of the tyre cavities.

In the present arrangement, the ECU 15 retrieves the inflation time and/or the deflation time from a look-up table stored in a memory device accessible to the ECU 15. The look-up table can take the form of a double entry table indexed according to the current tyre pressure and the target tyre pressure. Based on the current tyre pressure and the target tyre pressure, the ECU 15 can retrieve from the look-up table a value corresponding to, or representative of, the predetermined tyre inflation time for a given flow rate and air supply air pressure. Alternatively the look-up table may give a volume of air required and the ECU calculates the inflation time based on measured or estimated pressures and flow rates and the retrieved volumetric air requirement. Other methods may be useful.

The ECU 15 controls tyre inflation and/or deflation by opening and closing, as appropriate, the various valves V_{O}, V_{INC}, V_{INSS}, E₁, E₂ of the valve block 3. Tyre inflation and deflation can thus potentially be performed one tyre T at a time, or according to any combination of tyres T simultaneously. In the present arrangement, however, the ECU 15 is programmed to simultaneously deflate all the tyres T, or in pairs, and to inflate the tyres T one at a time or, simultaneously in pairs. If deflated/inflated in pairs, the pairs of tyres T are selected according to their location at the front or rear of the vehicle VH. In this event, the tyres T are said to be deflated/inflated by the CTIS 1 'per axle'.

In the present arrangement, the ECU 15 uses an algorithm to refer the current and target tyre pressures to a nominal tyre temperature of 25°C and to the case of tyre inflation of an individual tyre T. Alternatively, different look-up tables each corresponding to a tyre temperature and/or to the case of tyre inflation for two or more tyres T could be used. Compressed air losses in the CTIS 1 may affect the period of time taken for the CTIS 1 to achieve a predetermined pressure. The values stored in the look-up table could be dynamically updated to take into account the effects of said losses. The values could, for example, be updated via one or more self-learning algorithms.

The ECU 15 is in addition configured to provide information relating to the status and/or operation of the CTIS 1 to a vehicle user via a human-machine interface (HMI) 37. A dashboard (not shown) of the vehicle VH is in addition equipped with a visual output, for example a tyre operation dial 39, to provide a user with information as to whether compressed air is being supplied to, or exhausted from, the tyre cavities.

Figure 3 illustrates the relationship between the main mechanical components of the CTIS 1 described herein (which incorporates the valve block 3 illustrated in Figure 2) and a vehicle control system 41. The vehicle control system 41 comprises the ECU 15. The ECU 15 is programmed to implement the control strategies and procedures described herein. In this arrangement, the ECU 15 includes an input which receives from a tyre pressure monitoring system (TPMS) 43, via a vehicle controller area network (CAN) 45, real-time information relating to the current tyre pressures for the four tyres T of the vehicle VH. This real-time information can therefore comprise a signal indicative of tyre pressure in any of the tyres (T), and/or a signal indicative of a leak from a tyre (T).

The pressure sensor communicates directly with the ECU 15 via electric signals representative of the pressure measured by the pressure sensor 35 in the gallery 33 of the valve block 3. As described earlier, the pneumatic control valves PCV and the various valves V, I, E of the valve block 3 can be configured such that the pressure sensor 35 measures a pressure which is representative of the pressure inside each of the tyres T. The TPMS 43 also monitors the temperature inside the tyres T so that the tyre pressures can be referred to a nominal temperature of 25 degrees C using appropriate algorithms, for example a thermocouple or other thermal sensor may be located in or through the hub of each wheel.

The ECU 15 implements tyre inflation and/or deflation strategies as described herein on the basis of the relationship between the target tyre pressures and the current tyre pressures as measured by the TPMS 43 and/or pressure sensor 35. To do this, the ECU 15 is required to control the various mechanical components of the CTIS 1. As seen in Figure 3, the ECU 15 is configured to control the outlet valves VO via a pulse width modulation (PWM) control network 47. Via the same PWM control network 47, the ECU 15 also controls the purging function of the dryer unit 29, the electric motor 27 which drives the compressor 9, the first and second inlet valves V_{INC}, V_{INSS}, the exhaust valves E₁, E₂ and the safety valve V_{SAFE}. As described herein, the target tyre pressures can be manually selected by the driver of the vehicle via the human-to-machine interface (HMI) 37 or they can be automatically selected by the vehicle control system 41 on the basis of other information including vehicle driving modes. The HMI 37 communicates with the ECU 15 via the vehicle CAN 45. As an alternative to PWM control full cycle on/off solenoid valves could be used.

As already noted, the above described CTIS 1 enables implementation of inflation and deflation strategies for the tyres T of the vehicle VH during normal operation. In accordance with embodiments of the invention, the CTIS 1 can also be used to detect and mitigate air leakages from the tyres T.

As checking the tyre pressure for a tyre T of the vehicle VH using the CTIS 1 involves opening the respective PCV for that tyre T, which inherently deflates the tyre T to some extent, it is undesirable to check the tyre pressure in this way too frequently. Instead, during normal operation when the CTIS 1 is not actively controlling the tyre pressures and all PCVs are closed, tyre pressure measurements are provided at regular intervals by the TPMS 43. These measurements can be monitored to check for decreasing pressure which may be indicative of air loss from the tyre T, to provide an early indication of leakage. This monitoring can be performed by the TPMS 43 itself, or by a controller such as the ECU 15.

Once a possible leakage has been detected using the TPMS 43 measurements, the CTIS 1 can be used to take more accurate measurements to confirm the presence of a leakage, and to take corrective action as required to compensate for any air loss.

Before attempting to compensate for the air loss, the CTIS 1 is also controlled so as to assess the severity of the leakage and the required work from the compressor 9 to provide compensation. This information can be used, in combination with data relating to other operating conditions such as ambient temperature and the temperature of the compressor 9, to determine whether the compressor 9 is able to provide the required compensation. If the air loss rate is higher than the rate at which the compressor 9 can deliver compressed air to the tyre T, the CTIS 1 will not be able to compensate for the air loss. Even if the air loss rate is lower than the delivery rate, the compressor 9 may still be incapable of providing compensation. This is because if the difference between the air loss rate and the delivery rate is small, it will take a long time for the compressor 9 to compensate the air loss, during which time the compressor 9 may overheat.

It is recalled at this stage that overheating of the compressor 9 may be a problem in consumer vehicles in particular, in which the compressor 9 is likely to be situated within a noise-reducing enclosure that inherently compromises the ability of the compressor 9 to dissipate heat by convection. It is therefore advantageous to be able to assess a leakage to determine whether the compressor 9 will be able to provide compensation without overheating. This enables an appropriate notification to be delivered to the driver via the HMI 37 at an early stage, allowing the driver to take action before the tyre pressure becomes unacceptably low. Otherwise, the system may waste time attempting to inflate a tyre that it is ultimately unable to inflate.

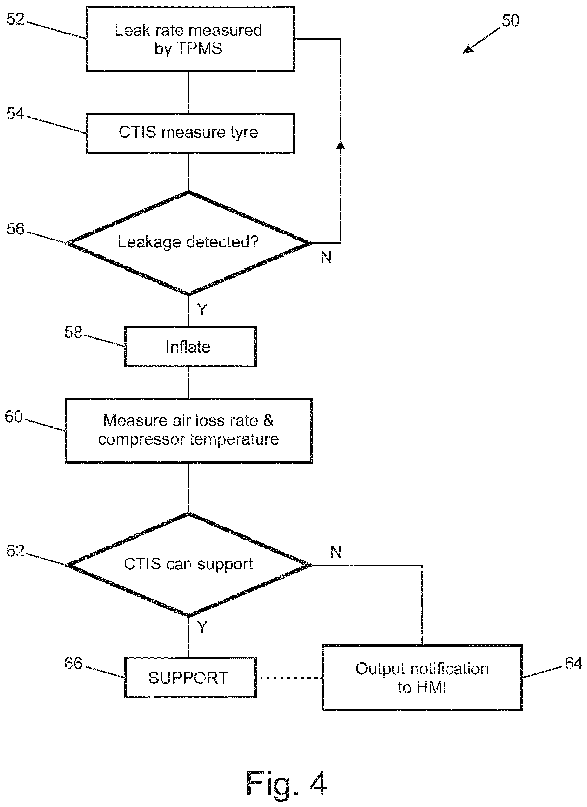

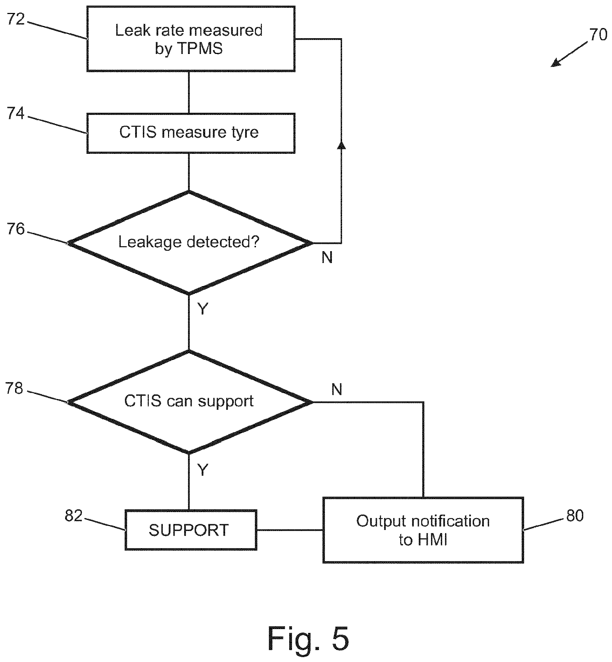

Figures 4 and 5 show two alternative ways in which the detection, assessment and compensation of a leakage may be implemented using the above CTIS 1 under the control of the ECU 15. These alternatives shall be described now in turn.

Figure 4 shows a first process 50 for controlling operation of the CTIS 1 to inflate a tyre T to compensate for air loss. The process 50 begins with a leakage being detected at step 52 by the TPMS 43. This may entail a leakage alert being generated by the TPMS 43 and passed to the CTIS 1, or alternatively pressure measurements output by the TPMS 43 may be monitored by the ECU 15 for leakage detection.

Once a leakage has been detected based on TPMS 43 measurements, the CTIS 1 opens the PCV of the tyre T that is suspected of leaking to take a measurement at step 54 of the tyre pressure. This step is performed as the CTIS 1 is able to capture more accurate data than the TPMS 43. One or more further tyre pressure measurements are taken at spaced intervals, and if the tyre pressure drops between successive measurements a leakage is determined at step 56 to be present. If the CTIS 1 finds no leakage, the TPMS 43 measurement is assumed to be incorrect, i.e. there is a TPMS sensor fault. The process thereafter ignores the TPMS signal and may issue a warning to the driver of a TPMS sensor failure. Alternatively the next time that the vehicle is turned off and turned on again the system may resume normal operation for that cycle of operation, i.e. until the next key off event.

If the CTIS 1 detects that the tyre T is leaking, the CTIS 1 is then controlled to assess the leakage by taking a series of pressure measurements over an extended period of, for example a time period of 1 to 15 minutes (other time periods may be useful), to determine the rate of air loss from the tyre T. The way in which this assessment step is implemented is where the two processes shown in Figures 4 and 5 diverge, as shall become clear in the description that follows.

In the process 50 shown in Figure 4, the tyre T is inflated at step 58 prior to assessing the air loss rate. The extent of the inflation may, for example, be tailored to balance air loss from the tyre T as a result of opening its PCV for each pressure measurement taken by the CTIS 1. Once inflated, the CTIS 1 takes a series of pressure measurements at step 60 over an extended time period as noted above. The temperature of the compressor 9 is also measured. The pressure measurements are analysed to determine the air loss rate. Separately, a rate of air loss threshold is calculated based on the pumping capacity of the compressor 9, taking into account also the compressor temperature measurement, along with other data relating to operating conditions if available. The rate of air loss threshold represents the maximum air loss rate that the compressor 9 can compensate for without overheating. The ECU 15 then determines at step 62 whether the CTIS 1 can support compensation by comparing the measured air loss rate with the rate of air loss threshold.

If the CTIS 1 cannot support leakage compensation, a notification is output at step 64 to the HMI 37 to alert the driver to the fact that there is a significant leakage that the CTIS 1 cannot support. If the CTIS 1 can support leakage compensation, support commences at step 66 by activating the compressor 9 to inflate the tyre T to a target pressure, the target pressure being governed by the operating strategies outlined above and in accordance with instantaneous operating conditions for the vehicle VH. A notification to indicate that leakage compensation has been implemented is then output to the HMI 37 at the notification step 64.

It is noted that the step of inflating the tyre T prior to assessing the rate of air loss from the tyre T helps to ensure that the tyre pressure does not become unacceptably low before the assessment completes. However, the time spent inflating the tyre T extends the overall duration of the process 50.

It is noted that the step 62 of determining whether the CTIS 1 can support compensation for a leak may be implemented differently. For example, once the leak rate has been identified at step 60, the leak rate can be compared with a threshold leak rate that the CTIS 1 is capable of supporting over a predetermined time period without reference to the compressor temperature. If the CTIS 1 is capable in principle of providing support, its temperature is then checked enabling the ECU 15 to determine whether the CTIS 1 can run for a minimum CTIS run time without overheating. The minimum CTIS run time may be defined as a fixed time interval, or alternatively it may be defined as a distance of vehicle travel, with the time therefore being calculated from the instantaneous vehicle speed.

Figure 5 shows a second process 70 for controlling operation of the CTIS 1 to inflate a tyre T to compensate for air loss. As in the process 50 of Figure 4, the process 70 of Figure 5 begins with a leakage being detected at step 72 by the TPMS 43. As before, this may entail a leakage alert being generated by the TPMS 43 and passed to the CTIS 1. Alternatively, pressure measurements output by the TPMS 43 may be monitored by the ECU 15 for leakage detection.

Once a leakage has been detected based on TPMS 43 measurements, the CTIS 1 opens the PCV of the tyre T that is suspected of leaking to take a measurement at step 74 of the tyre pressure. One or more further tyre pressure measurements are taken at spaced intervals over an extended time period, to provide sufficient measurement data not only to confirm the presence of a leak, but to assess the rate of air loss with accuracy also. Therefore, the process 70 of Figure 5 skips the inflation step 58 of the process shown in Figure 4 following the initial CTIS 1 pressure measurement step 54. Instead, in the process shown in Figure 5 a full assessment of the leakage is performed immediately by the CTIS 1 on detection of a leakage by the TPMS 43. This assessment results in a determination at step 76 of whether there is a leakage and, if necessary, a calculation at step 78 of whether leakage compensation can be supported.

If the CTIS 1 finds no leakage at step 76, the process 70 returns to the initial step 72 of awaiting detection of a leak by the TPMS 43. As stated above, if the CTIS system determines there is not a pressure leak a TPMS error may be identified and corresponding action taken.

If the CTIS 1 detects that the tyre T is leaking, the pressure measurement data gathered by the CTIS 1 is analysed to determine the rate of air loss from the tyre T. As before, the temperature of the compressor 9 is also measured, and from this the rate of air loss threshold is calculated. The ECU 15 then compares the air loss rate with the rate of air loss threshold to determine at step 78 whether the compressor 9 is able to support leakage compensation without overheating.

As with the process 50 of Figure 4, in the process 70 of Figure 5 the step 78 of determining whether the CTIS 1 can support compensation for a leak may be implemented differently. For example, once the leak rate has been identified at step 76, the leak rate can be compared with a threshold leak rate that the CTIS 1 is capable of supporting over a predetermined time period without reference to the compressor temperature. If the CTIS 1 is capable in principle of providing support, its temperature is then checked enabling the ECU 15 to determine whether the CTIS 1 can run for a minimum CTIS run time without overheating. The minimum CTIS run time may be defined as a fixed time interval, or alternatively it may be defined as a distance of vehicle travel, with the time therefore being calculated from the instantaneous vehicle speed.

If the CTIS 1 cannot support leakage compensation, a notification is output at step 80 to the HMI 37 to alert the driver to the fact that there is a significant leakage that the CTIS 1 cannot support. If the CTIS 1 can support leakage compensation, support commences at step 82 by activating the compressor 9 to inflate the tyre T to a target pressure, the target pressure being governed by the operating strategies mentioned above. A notification to indicate that leakage compensation has been implemented is then output to the HMI 37 at the notification step 80.

The process 70 of Figure 5 provides an assessment of a leakage more quickly than the first process 50 shown in Figure 4, meaning that leakage compensation can be initiated earlier. This also enables earlier notification of a problem to the driver. However, as the tyre T is not inflated prior to assessing the air loss rate in the process of Figure 5, there is a risk that the assessment procedure could cause the tyre pressure to drop unacceptably to a point where compensation is no longer viable. These considerations must be balanced when considering which of the two approaches to implement.

It will be appreciated by a person skilled in the art that the invention could be modified to take many alternative forms to that described herein, without departing from the scope of the appended claims.

## Claims

1. A central tyre inflation system (1) of a vehicle for supplying compressed air to a tyre (T) of the vehicle to compensate for air loss from the tyre (T), the central tyre inflation system comprising (1):
means for determining a rate of air loss from the tyre (T);
a sensor arranged to measure a temperature of a compressor (9) of the central tyre inflation system; and
an electronic control unit (15) configured to:
compare the rate of air loss with a rate of air loss threshold;
determine, based on the compressor temperature and the comparison of the rate of air loss with the rate of air loss threshold, whether to use the central tyre inflation system (1) to compensate for the air loss; and
control the central tyre inflation system (1) to supply compressed air to the tyre (T) to compensate for the air loss if it is determined to use the central tyre inflation system (1) to compensate for the air loss.

2. A central tyre inflation system (1) as claimed in claim 1, wherein the electronic control unit (15) comprises:
an electronic processor having an electrical input for receiving a signal indicative of the temperature of said compressor; and
an electronic memory device electrically coupled to the electronic processor and having instructions stored therein,
wherein said electronic control unit configured to: compare the rate of air loss with a rate of air loss threshold; determine, based on the compressor temperature and the comparison of the rate of air loss with the rate of air loss threshold, whether to use the central tyre inflation system (1) to compensate for the air loss; and control the central tyre inflation system (1) to supply compressed air to the tyre to compensate for the air loss if it is determined to use the central tyre inflation system (1) to compensate for the air loss comprises the electronic processor being configured to access the memory device and execute the instructions stored therein such that it is operable to determine, based on the compressor temperature and the comparison of the rate of air loss with the rate of air loss threshold, whether to use the central tyre inflation system (1) to compensate for the air loss; and control the central tyre inflation system (1) to supply compressed air to the tyre to compensate for the air loss.

3. A central tyre inflation system (1) as claimed in claim 1 or claim 2, wherein the electronic control unit is configured to calculate the rate of air loss threshold with reference to a pumping capacity of the compressor (9) of the central tyre inflation system .

4. A central tyre inflation system (1) as claimed in any one of claims 1 to 3, wherein the electronic control unit is configured to determine based on the compressor temperature whether the compressor (9) can operate for a defined period without exceeding a temperature threshold, and further configured to determine that the central tyre inflation system (1) cannot support compensation for the air loss if the compressor temperature will exceed the temperature threshold in the defined period.

5. A central tyre inflation system (1) as claimed in any one of claims 1 to 3, wherein the electronic control unit is configured to calculate the rate of air loss threshold with reference to the compressor temperature.

6. A central tyre inflation system (1) as claimed in any preceding claim, comprising an input arranged to receive a signal indicative of air pressure within the tyre, wherein the electronic control unit is configured to monitor the signal indicative of air pressure within the tyre to detect a leak from the tyre prior to determining a rate of air loss from the tyre (T).

7. A central tyre inflation system (1) as claimed in claim 6, wherein the signal indicative of air pressure within the tyre (T) is received from a tyre pressure monitoring system installed on the vehicle.

8. A central tyre inflation system (1) as claimed in any of claims 1 to 5, comprising an input arranged to receive from a tyre pressure monitoring system installed on the vehicle a signal indicative of a leak from the tyre (T).

9. A central tyre inflation system (1) as claimed in any preceding claim, wherein the means for determining a rate of air loss from the tyre comprises:
a valve (V_{O}) that is operable by the electronic control unit to open or close communication between the tyre and a supply line (TSL) through which compressed air is supplied to the tyre (T); and
a pressure sensor (35) configured to measure air pressure in the supply line ;
wherein the electronic control unit is arranged to:
open the valve (V_{O});
while the valve (V_{O}) is open, take a first measurement of air pressure in the supply line (TSL);
close the valve (V_{O});
re-open the valve (V_{O}) after a time interval has elapsed;
while the valve (V_{O}) is open, take a second measurement of air pressure in the supply line (TSL); and
compare the first and second measurements of air pressure to determine the rate of air loss.

10. A central tyre inflation system (1) as claimed in any preceding claim, wherein the electronic control unit is configured to control the central tyre inflation system (1) to inflate the tyre (T) at least substantially to a target tyre pressure.

11. A central tyre inflation system (1) as claimed in any preceding claim, wherein the electronic control unit is configured to determine a vehicle speed limit based on the rate of air loss from the tyre (T).

12. A central tyre inflation system (1) as claimed in any preceding claim, wherein compensating for the air loss comprises controlling the central tyre inflation system (1) to supply compressed air to the tyre (T) at a rate which is substantially equal to or greater than the determined rate of air loss from the tyre (T).

13. A method of controlling operation of a central tyre inflation system (1) of a vehicle to supply compressed air to a tyre (T) of the vehicle to compensate for air loss from the tyre (T), said method comprising:
determining a rate of air loss from the tyre (T);
measuring a temperature of a compressor (9) of the central tyre inflation system (1);
comparing the rate of air loss with a rate of air loss threshold;
determining, based on the compressor temperature and the comparison of the rate of air loss with the rate of air loss threshold, whether to use the central tyre inflation system (1) to compensate for the air loss; and
using the central tyre inflation system (1) to supply compressed air to the tyre (T) to compensate for the air loss if it is determined to use the central tyre inflation system (1) to compensate for the air loss.

14. A method as claimed in claim 13, comprising calculating the rate of air loss threshold with reference to a pumping capacity of the compressor (9) of the central tyre inflation system (1), and/or
comprising determining based on the compressor temperature whether the compressor (9) can operate for a defined period without exceeding a temperature threshold, and determining that the central tyre inflation system (1) cannot support compensation for the air loss if the compressor temperature will exceed the temperature threshold in the defined period.

15. A vehicle comprising a central tyre inflation system as claimed in any of claims 1 to 12.

## Patentansprüche

1. Zentrales Reifenfüllsystem (1) eines Fahrzeugs zum Zuführen von Druckluft in einen Reifen (T) des Fahrzeugs, um den Luftverlust des Reifens (T) auszugleichen, wobei das zentrale Reifenfüllsystem (1) umfasst:
Mittel zum Bestimmen einer Luftverlustrate aus dem Reifen (T);
einen Sensor, der zum Messen einer Temperatur eines Kompressors (9) des zentralen Reifenfüllsystems angeordnet ist; und
eine elektronische Steuereinheit (15), die dazu konfiguriert ist,
die Luftverlustrate mit einem Luftverlustratenschwellenwert zu vergleichen;
basierend auf der Kompressortemperatur und des Vergleichs der Luftverlustrate mit dem Luftverlustratenschwellenwert zu bestimmen, ob das zentrale Reifenfüllsystem (1) zum Ausgleichen des Luftverlusts zu verwenden ist; und
das zentrale Reifenfüllsystem (1) zu steuern, um dem Reifen (T) Druckluft zuzuführen, um den Luftverlust auszugleichen, wenn bestimmt wird, das zentrale Reifenfüllsystem (1) zum Ausgleichen des Luftverlusts zu verwenden.

2. Zentrales Reifenfüllsystem (1) nach Anspruch 1, wobei die elektronische Steuereinheit (15) umfasst:
einen elektronischen Prozessor mit einem elektrischen Eingang zum Empfangen eines Signals, das die Temperatur des Kompressors anzeigt; und
eine elektronische Speichervorrichtung, die elektrisch mit dem elektronischen Prozessor gekoppelt ist und in der Anweisungen gespeichert sind, wobei die elektronische Steuereinheit dazu konfiguriert ist,
die Luftverlustrate mit einem Luftverlustratenschwellenwert zu vergleichen;
basierend auf der Kompressortemperatur und des Vergleichs der Luftverlustrate mit dem Luftverlustratenschwellenwert zu bestimmen, ob das zentrale Reifenfüllsystem (1) zum Ausgleichen des Luftverlusts zu verwenden ist; und
das zentrale Reifenfüllsystem (1) zu steuern, um dem Reifen Druckluft zuzuführen, um den Luftverlust auszugleichen, wenn bestimmt wird, das zentrale Reifenfüllsystem (1) zu verwenden, um den Luftverlust auszugleichen, umfassend den elektronischen Prozessor, der dazu konfiguriert ist, auf die Speichervorrichtung zuzugreifen und die darin gespeicherten Anweisungen auszuführen, so dass er dazu betrieben werden kann, basierend auf der Kompressortemperatur und des Vergleichs der Luftverlustrate mit dem Luftverlustratenschwellenwert zu bestimmen, ob das zentrale Reifenfüllsystem (1) zu verwenden ist, um den Luftverlust auszugleichen; und
das zentralen Reifenfüllsystem (1) zu steuern, um dem Reifen Druckluft zuzuführen, um den Luftverlust auszugleichen.

3. Zentrales Reifenfüllsystem (1) nach Anspruch 1 oder Anspruch 2, wobei die elektronische Steuereinheit dazu konfiguriert ist, den Luftverlustratenschwellenwert mit Bezug auf eine Pumpleistung des Kompressors (9) des zentralen Reifenfüllsystems zu berechnen.

4. Zentrales Reifenfüllsystem (1) nach einem der Ansprüche 1 bis 3, wobei die elektronische Steuereinheit dazu konfiguriert ist, basierend auf der Kompressortemperatur festzustellen, ob der Kompressor (9) für einen definierten Zeitraum betrieben werden kann, ohne einen Temperaturschwellenwert zu überschreiten, und ferner dazu konfiguriert ist, zu bestimmen, dass das zentrale Reifenfüllsystem (1) den Ausgleich für den Luftverlust nicht unterstützen kann, wenn die Kompressortemperatur den Temperaturschwellenwert in dem definierten Zeitraum überschreiten wird.

5. Zentrales Reifenfüllsystem (1) nach einem der Ansprüche 1 bis 3, wobei die elektronische Steuereinheit dazu konfiguriert ist, den Luftverlustratenschwellenwert mit Bezug auf die Kompressortemperatur zu berechnen.

6. Zentrales Reifenfüllsystem (1) nach einem der vorhergehenden Ansprüche, umfassend einen Eingang, der angeordnet ist, um ein Signal, das den Luftdruck in dem Reifen anzeigt, zu empfangen, wobei die elektronische Steuereinheit dazu konfiguriert ist, das Signal, das den Luftdruck im Reifen anzeigt, zu überwachen, um eine Undichtigkeit am Reifen zu erkennen, bevor eine Luftverlustrate aus dem Reifen (T) bestimmt wird.

7. Zentrales Reifenfüllsystem (1) nach Anspruch 6, wobei das Signal, das den Luftdruck in dem Reifen (T) anzeigt, von einem Reifendrucküberwachungssystem empfangen wird, das im Fahrzeug eingebaut ist.

8. Zentrales Reifenfüllsystem (1) nach einem der Ansprüche 1 bis 5, umfassend einen Eingang, der dazu angeordnet ist, von einem Reifendrucküberwachungssystem, das im Fahrzeug eingebaut ist, ein Signal zu empfangen, das eine Undichtigkeit am Reifen (T) anzeigt.

9. Zentrales Reifenfüllsystem (1) nach einem der vorhergehenden Ansprüche, wobei die Mittel zum Bestimmen der Luftverlustrate aus dem Reifen umfassen:
ein Ventil (V_{O}), das durch die elektronische Steuereinheit betätigbar ist, um die Verbindung zwischen dem Reifen und einer Versorgungsleitung (TSL) zu öffnen oder zu schließen, durch die dem Reifen (T) Druckluft zugeführt wird; und
einen Drucksensor (35), der zum Messen des Luftdrucks in der Versorgungsleitung konfiguriert ist;
wobei die elektronische Steuereinheit dazu angeordnet ist,
das Ventil zu öffnen (V_{O});
bei geöffnetem Ventil (V_{O}) eine erste Messung des Luftdrucks in der Versorgungsleitung (TSL) vorzunehmen;
das Ventil (V_{O}) zu schließen;
das Ventil (V_{O}) nach Ablauf einer bestimmten Zeit wieder zu öffnen;
bei geöffnetem Ventil (V_{O}) eine zweite Messung des Luftdrucks in der Versorgungsleitung (TSL) vorzunehmen; und
die erste und zweite Luftdruckmessung miteinander zu vergleichen, um die Luftverlustrate zu bestimmen.

10. Zentrales Reifenfüllsystem (1) nach einem der vorhergehenden Ansprüche, wobei die elektronische Steuereinheit dazu konfiguriert ist, das zentrale Reifenfüllsystem (1) so zu steuern, dass der Reifen (T) mindestens im Wesentlichen auf einen Soll-Reifendruck befüllt wird.

11. Zentrales Reifenfüllsystem (1) nach einem der vorhergehenden Ansprüche, wobei die elektronische Steuereinheit dazu konfiguriert ist, eine Fahrzeuggeschwindigkeitsbegrenzung basierend auf der Luftverlustrate aus dem Reifen (T) zu bestimmen.

12. Zentrales Reifenfüllsystem (1) nach einem der vorhergehenden Ansprüche, wobei der Ausgleich für den Luftverlust umfasst, das zentrale Reifenfüllsystem (1) zu steuern, um dem Reifen (T) Druckluft mit einer Rate zuzuführen, die im Wesentlichen gleich oder größer der bestimmten Luftverlustrate des Reifens (T) ist.

13. Verfahren zum Steuern des Betriebs eines zentralen Reifenfüllsystems (1) eines Fahrzeugs, um einem Reifen (T) des Fahrzeugs Druckluft zuzuführen, um den Luftverlust aus dem Reifen (T) auszugleichen, wobei das Verfahren Folgendes umfasst:
Bestimmen einer Luftverlustrate aus dem Reifen (T);
Messen einer Temperatur eines Kompressors (9) des zentralen Reifenfüllsystems (1);
Vergleichen der Luftverlustrate mit einem Luftverlustratenschwellenwert;
Bestimmen, auf der Basis der Kompressortemperatur und des Vergleichs der Luftverlustrate mit dem Luftverlustratenschwellenwert zu bestimmen, ob das zentrale Reifenfüllsystem (1) zum Ausgleichen des Luftverlusts zu verwenden ist; und
Verwenden des zentralen Reifenfüllsystems (1), um dem Reifen (T) Druckluft zuzuführen, um den Luftverlust auszugleichen, wenn bestimmt wird, das zentrale Reifenfüllsystem (1) zum Ausgleichen des Luftverlusts zu verwenden.

14. Verfahren nach Anspruch 13, umfassend das Berechnen des Luftverlustratenschwellenwerts mit Bezug auf eine Pumpleistung des Kompressors (9) des zentralen Reifenfüllsystems (1) und/oder umfassend das Bestimmen, basierend auf der Kompressortemperatur, ob der Kompressor (9) für einen definierten Zeitraum in Betrieb sein kann, ohne einen Temperaturschwellenwert zu überschreiten, und Bestimmen, dass das zentrale Reifenfüllsystem (1) keinen Ausgleich für den Luftverlust unterstützen kann, wenn die Kompressortemperatur den Temperaturschwellenwert in dem definierten Zeitraum überschreitet.

15. Fahrzeug, umfassend ein zentrales Reifenfüllsystem nach einem der Ansprüche 1 bis 12.

## Revendications

1. Système central de gonflage de pneumatiques (1) d'un véhicule pour l'alimentation en air comprimé d'un pneumatique
(T) du véhicule pour compenser les pertes d'air du pneumatique (T), le système central de gonflage du pneumatique comprenant (1) :
des moyens pour déterminer un taux de perte d'air du pneumatique (T) ;
un capteur agencé pour mesurer la température d'un compresseur (9) du système central de gonflage des pneumatiques ; et
une unité de commande électronique (15) configurée pour :
comparer le taux de perte d'air avec un seuil de taux de perte d'air ;
déterminer, sur la base de la température du compresseur et de la comparaison du taux de perte d'air avec le seuil du taux de perte d'air, s'il convient d'utiliser le système central de gonflage des pneus (1) pour compenser la perte d'air ; et
commander le système central de gonflage de pneumatique (1) pour fournir de l'air comprimé au pneumatique (T) pour compenser la perte d'air s'il est déterminé à utiliser le système central de gonflage de pneumatique (1) pour compenser la perte d'air.

2. Système central de gonflage de pneumatique (1) selon la revendication 1, dans lequel l'unité de commande électronique (15) comprend : un processeur électronique ayant une entrée électrique pour recevoir un signal indiquant la température dudit compresseur ; et un dispositif de mémoire électronique couplé électriquement au processeur électronique et comportant des instructions stockées dans celui-ci, dans lequel ladite unité de commande électronique est configurée pour :
comparer le taux de perte d'air avec un seuil de perte d'air ; déterminer, sur la base de la température du compresseur et de la comparaison du taux de perte d'air avec le seuil de perte d'air, s'il convient d'utiliser le système central de gonflage des pneus (1) pour compenser la perte d'air, et
commander le système central de gonflage de pneumatique (1) pour fournir de l'air comprimé au pneumatique afin de compenser la perte d'air s'il est déterminé d'utiliser le système central de gonflage de pneumatique (1) pour compenser la perte d'air, le processeur électronique étant configuré pour accéder au dispositif de mémoire et exécuter les instructions qui y sont stockées, de manière à pouvoir déterminer, en fonction de la température du compresseur et la comparaison du taux de pertes en air avec le taux de perte en air, si le système central de gonflage de pneumatique (1) doit servir de compensation pour la perte en air ; et
commander le système central de gonflage des pneus (1) pour fournir de l'air comprimé au pneu afin de compenser la perte d'air.

3. Système central de gonflage de pneumatiques (1) selon la revendication 1 ou la revendication 2, dans lequel l'unité de commande électronique est configurée pour calculer le seuil de vitesse de perte d'air par rapport à une capacité de pompage du compresseur (9) du système central de gonflage de pneumatiques.

4. Système central de gonflage de pneumatiques (1) selon l'une quelconque des revendications 1 à 3, dans lequel l'unité de commande électronique est configurée pour déterminer, sur la base de la température du compresseur, si le compresseur (9) peut fonctionner pendant une période définie sans dépasser un seuil de température, et configuré en outre pour déterminer que le système central de gonflage de pneumatiques (1) ne peut supporter la compensation de la perte de pression si la température du compresseur dépasse le seuil de température pendant cette période définie.

5. Système central de gonflage de pneumatiques (1) selon l'une quelconque des revendications 1 à 3, dans lequel l'unité de commande électronique est configurée pour calculer le seuil du taux de perte d'air par rapport à la température du compresseur.

6. Système central de gonflage de pneumatique (1) tel que revendiqué dans toute revendication précédente, comprenant une entrée agencée pour recevoir un signal indiquant la pression d'air dans le pneumatique, dans lequel l'unité de commande électronique est configurée pour surveiller le signal indiquant la pression d'air dans le pneumatique pour détecter une fuite du pneumatique avant de déterminer un taux de perte d'air par le pneumatique (T).

7. Système central de gonflage de pneumatique (1) selon la revendication 6, dans lequel le signal indiquant la pression d'air à l'intérieur du pneumatique (T) est reçu d'un système de surveillance de pression de pneumatique installé sur le véhicule.

8. Système central de gonflage de pneumatique (1) selon l'une quelconque des revendications 1 à 5, comprenant une entrée agencée pour recevoir d'un système de surveillance de pression de pneumatique installé sur le véhicule un signal indiquant une fuite du pneumatique (T).

9. Système central de gonflage de pneumatique (1) tel que revendiqué dans toute revendication précédente, dans lequel le moyen pour déterminer un taux de perte d'air du pneumatique comprend :
une valve (Vo) qui peut être actionnée par l'unité de commande électronique pour ouvrir ou fermer la communication entre le pneumatique et une conduite d'alimentation (TSL) par laquelle de l'air comprimé est fourni au pneumatique (T) ; et
un capteur de pression (35) configuré pour mesurer la pression d'air dans la conduite d'alimentation ; dans lequel l'unité de commande électronique est agencée pour : ouvrir la vanne(Vo) ;
lorsque la vanne (Vo) est ouverte, effectuer une première mesure de la pression d'air dans la conduite d'alimentation (TSL) ;
fermer la vanne (Vo) ;
rouvrir la vanne (Vo) après qu'un intervalle de temps se soit écoulé ; pendant que la vanne (Vo) est ouverte, prendre une deuxième mesure de la pression d'air dans la conduite d'alimentation (TSL) ; et
comparer les première et deuxième mesures de pression d'air pour déterminer le taux de perte d'air.

10. Système central de gonflage de pneumatique (1) tel que revendiqué dans toute revendication précédente, dans lequel l'unité de commande électronique est configurée pour commander le système central de gonflage de pneumatique (1) pour gonfler le pneumatique (T) au moins sensiblement à une pression cible du pneumatique.

11. Système central de gonflage de pneumatique (1) tel que revendiqué dans toute revendication précédente, dans lequel l'unité de commande électronique est configurée pour déterminer une limite de vitesse du véhicule sur la base du taux de perte d'air par le pneumatique (T).

12. Système central de gonflage de pneumatique (1) tel que revendiqué dans toute revendication précédente, dans lequel la compensation de la perte d'air comprend la commande du système central de gonflage de pneumatique (1) pour fournir de l'air comprimé au pneumatique (T) à un taux qui est sensiblement égal ou supérieur au taux déterminé de perte d'air par le pneumatique (T).

13. Procédé de commande du fonctionnement d'un système central de gonflage de pneumatique (1) d'un véhicule pour fournir de l'air comprimé à un pneumatique (T) du véhicule afin de compenser les pertes d'air du pneumatique (T), ledit procédé comprenant :
détermination d'un taux de perte d'air par le pneumatique (T) ;
la mesure de la température d'un compresseur (9) du système central de gonflage des pneumatiques (1) ; la comparaison du taux de perte d'air avec un seuil de taux de perte d'air ;
déterminer, sur la base de la température du compresseur et de la comparaison du taux de perte d'air avec le seuil du taux de perte d'air, s'il convient d'utiliser le système central de gonflage des pneumatiques (1) pour compenser la perte d'air ; et
l'utilisation du système central de gonflage de pneumatique (1) pour fournir de l'air comprimé au pneumatique (T) pour compenser la perte d'air s'il est déterminé qu'il utilise le système central de gonflage de pneumatique (1) pour compenser la perte d'air.

14. Procédé selon la revendication 13, comprenant le calcul du seuil de vitesse de perte d'air par rapport à une capacité de pompage du compresseur (9) du système central de gonflage des pneus (1), et/ou
comprenant:déterminer, sur la base de la température du compresseur, si le compresseur (9) peut fonctionner pendant une période définie sans dépasser un seuil de température, et déterminer que le système central de gonflage des pneus (1) ne peut pas supporter la compensation de la perte d'air si la température du compresseur dépasse le seuil de température pendant cette période définie.

15. Véhicule comprenant un système central de gonflage de pneumatiques tel que revendiqué dans l'une quelconque des revendications 1 à 12.
